# EUROPÄISCHE PATENTSCHRIFT

(11) **EP 1 348 083 B1**
(45) Veröffentlichungstag und Bekanntmachung des Hinweises auf die Patenterteilung: **15.12.2004**
(21) Anmeldenummer: 01985920.6
(22) Anmeldetag: 20.12.2001
(51) Int. Cl.: F16H 25/22, B29C 45/66

(54) **GEWINDETRIEB**
THREADED DRIVE
DISPOSITIF D'ENTRAINEMENT A ELEMENTS FILETES

(30) Priorität: 29.12.2000 DE 10065291
(43) Veröffentlichungstag der Anmeldung: 01.10.2003
(73) Patentinhaber: Mannesmann Plastics Machinery GmbH, 80997 München (DE)
(72) Erfinder: FISCHBACH, Gunther, 82256 Fürstenfeldbruck (DE)
(74) Vertreter: Zollner, Richard, Dipl.-Phys.
(86) Internationale Anmeldenummer: PCT/EP2001/015173
(87) Internationale Veröffentlichungsnummer: WO 2002/053950

(56) Entgegenhaltungen:
- DE-U- 29 506 066
- US-A- 5 378 141
- US-A- 5 426 989

## Beschreibung

Die Erfindung betrifft einen Gewindetrieb gemäß Oberbegriff des Patentanspruchs 1, die als allgemein bekannt zu gelten haben.

Gewindetriebe dieser Art, wie z.B. Kugelgewindetriebe, sind gut zur Durchführung schneller Stellbewegungen bei verhältnismäßig geringer Belastung geeignet. Zur Übertragung hoher statischer Belastungen ist ein Gewindetrieb mit Wälzkörpern jedoch weniger geeignet, da die Kraftübertragung über die sehr geringen Berührungsflächen zwischen Wälzkörper und Wälzkörperrille erfolgt.

Bei der Verwendung eines Kugelgewindetriebes bei einer Spritzgießmaschine besteht daher das Problem, dass die Spindelmutter, die die schnell zu bewerkstelligende Öffnungs- und Schließbewegung der beweglichen Formaufspannplatte durchzuführen hat, zwar gut für Schnellbewegung geeignet ist, jedoch den beträchtlichen Belastungen bei der Schließkraftaufbringung nur schwer und unter hohem Verschleißrisiko standhalten kann.

Der vorliegenden Erfindung liegt daher die Aufgabe zugrunde, Gewindetriebe der genannten Art mit einfachen baulichen Maßnahmen auch für hohe statische Belastungen geeignet zu machen.

Diese Aufgabe wird durch die in den Ansprüchen 1 und 12 angegebene Vorrichtung gelöst. Die weiteren Ansprüche beziehen sich auf weitere vorteilhafte Ausgestaltungen und Verwendungen der Erfindung.

Der Erfindung liegt dabei nach Anspruch 1 die Erkenntnis zugrunde, die zwischen den Wälzkörperrillen vorhandene Oberfläche des Spindelbolzens zur Verriegelung des Spindelbolzens bei hoher Belastung zu nutzen. Es kann danach eine Funktionsaufteilung erfolgen, bei der einerseits schnelle und mit verhältnismäßig geringer Belastung durchzuführende Stellbewegungen von dem mit Wälzkörpern versehenen Gewindetrieb durchgeführt werden können und bei der andererseits hohe statische Belastungen über Verriegelungselemente aufgenommen werden können, die mit Verriegelungsausformungen an der Oberfläche des Spindelbolzens formschlüssig verbindbar sind.

Gemäß Anspruch 12 werden die im Spindelbolzen ohnehin vorhandenen Wälzkörperrillen als Verriegelungsausformungen genutzt, in die die Verriegelungselemente formschlüssig in Eingriff gebracht werden können.

Die Erfindung wird nachstehend anhand von Ausführungsbeispielen erläutert. Es zeigt
- Fig. 1: Im Schnitt eine schematische Teilansicht eines nach der Erfindung ausgestalteten Gewindetriebes und
- Fig. 2: die Seitenansicht auf eine 2-Platten-Schließeinheit einer Spritzgießmaschine.

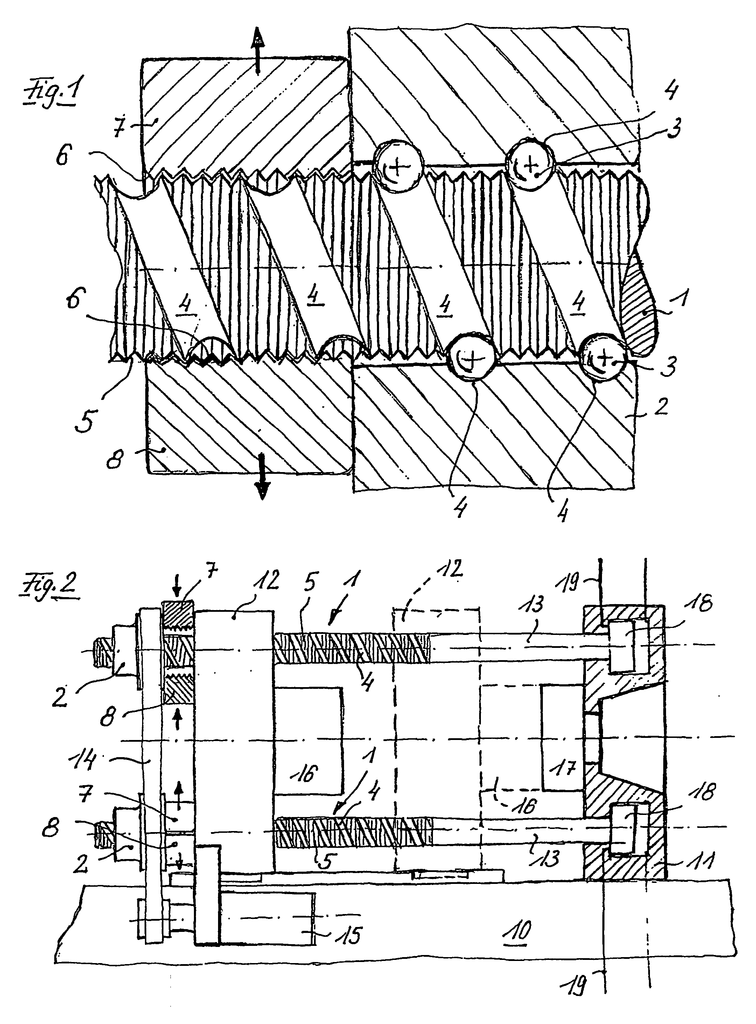

Fig. 1 zeigt einen Teilausschnitt eines aus Spindelbolzen 1, Spindelmutter 2 und Wälzkörpern in Form von Kugeln 3 bestehenden Gewindetriebes. Der Spindelbolzen 1 und die Spindelmutter 2 weisen jeweils Wälzkörperrillen 4 auf, die ein- oder mehrgängig sein können.

Die zwischen den Wälzkörperrillen 4 befindliche Oberfläche des Spindelbolzens 1 ist mit Verriegelungsausformungen in Form von parallelen Ringnuten 5 versehen. Mit den Verriegelungsausformungen bzw. den Ringnuten 5 befinden sich die komplementären Verriegelungsausformungen bzw. die Vorsprünge 6 zweier Verriegelungselemente 7 und 8 formschlüssig in Eingriff. Die Verriegelungselemente 7 und 8 sind mittels Stelleinrichtungen (nicht dargestellt) quer zur Achse des Spindelbolzens 1 verschiebbar.

Durch das Zusammenschieben der Verriegelungselemente 7 und 8 entsteht - wie dargestellt - eine formschlüssige Verbindung mit dem Spindelbolzen 1, wodurch für die Spindelmutter 2 ein fester Anschlag geschaffen wird, der höchsten Belastungen, beispielsweise der Schließdruckbelastung einer Spritzgießmaschine standhalten kann. Von diesen statischen Belastungen bleibt die Wälzkörpereinrichtung des Gewindetriebes weitestgehend unberührt, so daß dieser ohne schädigende Einflüsse aufgrund übergroßer statischer Belastungen in besonders geeigneter Weise nur für die Durchführung schneller Stellbewegungen eingesetzt werden kann.

Die Vorteile der Funktionsaufteilung zwischen der Durchführung schneller Stellbewegungen einerseits und der Aufnahme hoher statischer Belastungen andererseits werden bei der nachfolgend zu Fig. 2 beschriebenen Spritzgießmaschine deutlich.

Die Fig. 2 zeigt die Seitenansicht der 2-Plattenschließeinheit einer Spritzgießmaschine. Auf der Maschinenbett 10 sind eine feste Formaufspannplatte 11 und eine bewegliche Formaufspannplatte 12 abgestützt. Die Formaufspannplatten 11, 12 sind über vier Säulen 13 miteinander verbunden, wobei in der Darstellung nur zwei Säulen sichtbar sind. Die Säulen 13 sind an den die bewegliche Formaufspannplatte 12 durchsetzenden Enden als Spindelbolzen ausgebildet und entsprechen dem Spindelbolzen 1 nach Fig. 1.

An den die bewegliche Formaufspannplatte 12 überragenden Enden der Spindelbolzen 1 sind Spindelmuttern 2 montiert, die über einen Zahnriemen 14 von einem an der beweglichen Formaufspannplatte 12 befestigten Elektromotor 15 in Drehung versetzt werden können. Zwischen den Spindelmuttern 2 und der beweglichen Formaufspannplatte 12 sind Verriegelungselemente 7 und 8 vorgesehen, die - wie in Fig. 2 unten dargestellt - im zusammengefahrenen Zustand formschlüssig mit dem Spindelbolzen 1 verbunden sind und dabei ein festes axiales Auflager für die bewegliche Formaufspannplatte 12 bilden.

Im auseinandergefahrenen Zustand (in Fig. 2 oben dargestellt) sind die Verriegelungselemente 7 und 8 mit dem Spindelbolzen 1 außer Eingriff, so daß bei Drehung der Spindelmuttern 2 die bewegliche Formaufspannplatte 12 mit der Formhälfte 16 im Schnellgang auf die Formhälfte 17 der festen Formaufspannplatte 11 zubewegt werden kann, bis die bewegliche Formaufspannplatte die in unterbrochenen Linien dargestellte Formschließposition erreicht hat.

Anschließend werden die Verriegelungselemente 7 und 8 mit den Spindelbolzen 1 verriegelt, wodurch für die bewegliche Formaufspannplatte 12 feste Anschläge geschaffen werden und der erforderliche Schließdruck aufgebaut werden kann.

Der Schließdruckaufbau erfolgt hydraulisch durch Beaufschlagung der Kolben 18 über die Hydraulikleitungen 19.

Die in die parallenen Ringnuten 5 der als Spindelbolzen 1 ausgebildeten Endteile der Säulen 13 eingreifenden Verriegelungselemente 7 und 8 sind vorzugsweise unmittelbar hinter der beweglichen Formaufspannplatte 12 angeordnet, wodurch im verriegelten Zustand und bei Schließdruckbelastung die Spindelmuttern 2 vollkommen entlastet sind. Die in der Regel aus Kugeln bestehenden Wälzkörper der Gewindetriebe sind dabei weitestgehend unbelastet.

Grundsätzlich besteht auch die Möglichkeit, die Verriegelungselemente an den der beweglichen Formaufspannplatte 12 abgewandten Enden der Spindelmuttern 2 anzuordnen. Auch hier kann der Kugelspindeltrieb von der Schließdruckbelastung freigehalten werden, da sich der Schließdruck lediglich über den Spindelmutterkörper von der beweglichen Formaufspannplatte auf die mit dem Spindelbolzen 1 verriegelten Verriegelungselemente 7 und 8 überträgt. Die Kugeln bleiben dabei im wesentlichen unbelastet.

Die in Fig. 2 dargestellte Ausführungsform einer 2-Plattenschließeinheit einer Spritzgießmaschine stellt nur ein mögliches Anwendungsbeispiel dar. Der Kugelspindelantrieb mit den Verriegelungselementen kann grundsätzlich auch an der Rückseite der festen Formaufspannplatte angeordnet werden.

Die Erfindung ist auch nicht auf die Anwendung bei 2-Plattenschließeinheiten beschränkt. So kann die Erfindung auch bei 3-Plattenschließeinheiten verwendet werden, bei denen die bewegliche Formaufspannplatte zwischen einer maschinenbettfesten Formaufspannplatte und einer Abstützplatte bewegbar ist. Der erfindungsgemäße Gewindetrieb mit Verriegelungselementen kann dabei an den Rückseiten der festen Formaufspannplatte oder der Abstützplatte an den überstehenden Säulenenden angeordnet werden.

In einer alternativen Ausführungsform der Erfindung werden die Wälzkörperrillen des Spindelbolzens als Verriegelungsausformungen genutzt, in die die komplementären Verriegelungselemente formschlüssig eingreifen können. Im verriegelten Zustand und bei Sicherung gegen ein Verdrehen der Verriegelungselemente und des Spindelbolzens unter hoher statischer Belastung, wie z. B. der Schließdruckbelastung einer Spritzgießmaschine, wird somit bei Entlastung des Kugelspindeltriebes ein hoch belastbares Auflager geschaffen.

### Gewindetrieb

### Bezugszeichenliste

- 1: Spindelbolzen
- 2: Spindelmutter
- 3: Kugel
- 4: Wälzkörperrille
- 5: parallele Ringnuten
- 6: Vorsprünge
- 7: Verriegelungselemente
- 8: Verriegelungselemente
- 9: -
- 10: Maschinenbett
- 11: feste Formaufspannplatte
- 12: bewegliche Formaufspannplatte
- 13: Säulen
- 14: Zahnriemen
- 15: Elektromotor
- 16: Formhälfte
- 17: Formhälfte
- 18: Kolben
- 19: Hydraulikleitung

## Patentansprüche

1. Gewindetrieb bestehend aus Spindelbolzen (1), Spindelmutter (2) und Wälzkörpern (3), die in Wälzkörperrillen (4) des Spindelbolzens und der Spindelmutter in Eingriff stehen, **dadurch gekennzeichnet, dass** die zwischen den Wälzkörperrillen (4) befindliche Oberfläche des Spindelbolzens (1) Verriegelungsausformungen (5) aufweist, die mit komplementären Verriegelungsausformungen (6) von Verriegelungselementen (7, 8) formschlüssig verbindbar sind, die im wesentlichen quer zur Achse des Spindelbolzens (1) verschiebbar sind.

2. Gewindetrieb nach Anspruch 1, **dadurch gekennzeichnet, dass** die Verriegelungselemente (7, 8) axial an der Spindelmutter (2) abgestützt sind.

3. Gewindetrieb nach Anspruch 1, **dadurch gekennzeichnet, dass** die Verriegelungselemente (7, 8) axial an der vom Spindelbolzen (1) durchsetzten Auflagefläche des vom Gewindetrieb bewegten Teils abgestützt sind.

4. Gewindetrieb nach einem der Ansprüche 1 bis 3, **dadurch gekennzeichnet, dass** der Spindelbolzen (1) und die Spindelmutter (2) zwei oder mehrgängige Wälzkörperrillen (4) aufweisen.

5. Gewindetrieb nach einem der Ansprüche 1 bis 4, **dadurch gekennzeichnet, daß** die Wälzkörper Kugeln (3) sind.

6. Gewindetrieb nach einem der Ansprüche 1 bis 4, **dadurch gekennzeichnet, dass** die Wälzkörper Gewinderollen eines Rollengewindetriebes sind.

7. Gewindetrieb nach einem der Ansprüche 1 bis 6, **dadurch gekennzeichnet, dass** die Verriegelungsausformungen des Spindelbolzens (1) parallele Ringnuten (5) und die komplementären Verriegelungsausformungen der Verriegelungselemente (7, 8) Vorsprünge (6) sind.

8. Gewindetrieb nach einem der Ansprüche 1 bis 6, **dadurch gekennzeichnet, daß** die Verriegelungsausformungen des Spindelbolzens (1) und der Verriegelungselemente (7, 8) Gewinderillen mit zur Steigung der Wälzkörperrillen (4) gegensätzlicher Steigung sind.

9. Spritzgießmaschine mit mindestens einem Gewindetrieb vorzugsweise vier Gewindetrieben, nach einem der Ansprüche 1 bis 8, wobei die Spindelbolzen (1) Säulen (13) sind, die eine feste und eine bewegliche Formaufspannplatte (11, 12) miteinander zugfest verbinden und die Spindelmuttern (2) und die Verriegelungselemente (7, 8) an der Rückseite einer Formaufspannplatte (11 oder 12) angeordnet sind.

10. Spritzgießmaschine nach Anspruch 9, **dadurch gekennzeichnet, dass** die Verriegelungselemente (7, 8) geteilte Verriegelungsklammern sind, die hinter einer der Formaufspannplatten (11 oder 12) in die als Spindelbolzen (1) ausgebildeten Abschnitte der Säulen (13) verriegelbar eingreifen.

11. Spritzgießmaschine mit einer 3-Plattenschließeinheit bestehend aus einer festen Formaufspannplatte, einer beweglichen Formaufspannplatte und einer Endplatte, wobei zwischen der beweglichen Formaufspannplatte und der Endplatte mindestens ein Gewindetrieb, vorzugsweise zwei Gewindetriebe, nach einem der Ansprüche 1 bis 8 angeordnet ist und wobei die Spindelbolzen (1) Drucksäulen sind und die Spindelmuttern (2) und die Verriegelungselemente an der Endplatte angeordnet sind.

12. Gewindetrieb, bestehend aus Spindelbolzen (1), Spindelmutter (2) und Wälzkörpern, die in Wälzkörperrillen (4) des Spindelbolzens (1) und der Spindelmutter (2) in Eingriff stehen, **dadurch gekennzeichnet, dass** mindestens zwei Verriegelungselemente (7, 8) vorgesehen sind, die quer zur Achse des Spindelbolzens (1) verschiebbar sind und Verriegelungsausformungen aufweisen, die komplementär den Wälzkörperrillen (4) entsprechen, wobei der Spindelbolzen (1) und die Verriegelungselemente (7, 8) in der Verriegelungsstellung jeweils drehfest gehalten sind.

## Claims

1. Threaded drive consisting of a screw shaft (1), screw nut (2) and rolling bodies (3), which are in engagement in rolling body grooves (4) of the screw shaft and the screw nut, **characterised in that** the surface of the screw shaft (1) located between the rolling body grooves (4) has locking structures (5) which can be connected in an interlocking manner to complementary locking structures (6) of locking elements (7, 8) which are displaceable substantially transverse to the axis of the screw shaft (1).

2. Threaded drive according to claim 1, **characterised in that** the locking elements (7, 8) are supported axially on the screw nut (2).

3. Threaded drive according to claim 1, **characterised in that** the locking elements (7, 8) are supported axially on the support face, which is penetrated by the screw shaft (1), of the part moved by the threaded drive.

4. Threaded drive according to any one of claims 1 to 3, **characterised in that** the screw shaft (1) and the screw nut (2) have double-threaded or multi-threaded rolling body grooves (4).

5. Threaded drive according to any one of claims 1 to 4, **characterised in that** the rolling bodies are balls (3).

6. Threaded drive according to any one of claims 1 to 4, **characterised in that** the rolling bodies are threaded rollers of a roller threaded drive.

7. Threaded drive according to any one of claims 1 to 6, **characterised in that** the locking structures of the screw shaft (1) are annular channels (5) and the complementary locking structures of the locking elements (7, 8) are projections (6).

8. Threaded drive according to any one of claims 1 to 6, **characterised in that** the locking structures of the screw shaft (1) and the locking elements (7, 8) are threaded grooves with an opposite pitch in relation to the pitch of the rolling body grooves (4).

9. Injection moulding machine with at least one threaded drive, preferably four threaded drives, according to any one of claims 1 to 8, wherein the screw shafts (1) are columns (13) which connect a fixed and a movable platen (11, 12) to one another with tensile strength and the screw nuts (2) and the locking elements (7, 8) are arranged on the rear of a platen (11 or 12).

10. Injection moulding machine according to claim 9, **characterised in that** the locking elements (7, 8) are split locking clamps which engage in a lockable manner behind one of the platens (11 or 12) in the sections of the columns (13) formed as screw shafts (1).

11. Injection moulding machine with a 3-platen clamping unit consisting of a fixed platen, a movable platen and an end platen, wherein at least one threaded drive, preferably two threaded drives are arranged, according to any one of claims 1 to 8, between the movable platen and the end platen and wherein the screw shafts (1) are pressure columns and the screw nuts (2) and the locking elements are arranged on the end platen.

12. Threaded drive, consisting of a screw shaft (1), screw nut (2) and rolling bodies, which are in engagement in rolling body grooves (4) of the screw shaft (1) and the screw nut (2), **characterised in that** at least two locking elements (7, 8) are provided which are displaceable transverse to the axis of the screw shaft (1) and have locking structures which correspond in a complementary manner to the rolling body grooves (4), the screw shaft (1) and the locking elements (7, 8) being held, in each case, so as to be fixed against rotation in the locking position.

## Revendications

1. Entraînement fileté comprenant une tige filetée de broche (1), un écrou de broche (2) et des roulements de palier (3), qui sont engrenés dans les rainures (4) de la tige filetée de broche et de l'écrou de broche, **caractérisé en ce que** la surface de la tige filetée de broche (1) se trouvant entre les rainures (4) des roulements de palier comporte des formes de verrouillage (5) qui sont combinables par conjugaison de formes avec des formes complémentaires de verrouillage (6) des éléments de verrouillage (7, 8), qui peuvent être essentiellement déplacés en diagonale par rapport à l'axe de la tige filetée de broche (1).

2. Entraînement fileté selon la revendication 1, **caractérisé en ce que** les éléments de verrouillage (7, 8) sont appuyés de manière axiale sur l'écrou de broche (2).

3. Entraînement fileté selon la revendication 1, **caractérisé en ce que** les éléments de verrouillage (7, 8) sont appuyés de manière axiale à la surface d'appui traversée par la tige filetée de broche (1) de la partie mobile de l'entraînement fileté.

4. Entraînement fileté selon l'une des revendications 1 à 3, **caractérisé en ce que** la tige filetée de broche (1) et l'écrou de broche (2) comprennent des rainures (4) de roulements de palier à deux filets ou à filets multiples.

5. Entraînement fileté selon l'une des revendications 1 à 4, **caractérisé en ce que** les roulements de palier sont des billes (3).

6. Entraînement fileté selon l'une des revendications 1 à 4, **caractérisé en ce que** les roulements de paliers sont des filetages par roulage d'un entraînement fileté à billes.

7. Entraînement fileté selon l'une des revendications 1 à 6, **caractérisé en ce que** les formes de verrouillage de la tige filetée de broche (1) sont des rainures annulaires parallèles (5) et les formes de verrouillage complémentaires des éléments de verrouillage (7,8) sont des saillies (6).

8. Entraînement fileté selon l'une des revendications 1 à 6, **caractérisé en ce que** les formes de verrouillage de la tige filetée de broche (1) et des éléments de verrouillage (7, 8) sont des rainures filetées avec un pas contraire au pas des rainures des roulements de palier (4).

9. Machine d'injection avec au moins un entraînement fileté, de préférence quatre entraînements filetés, selon l'une des revendications 1 à 8, sachant que les tiges filetées de broche (1) sont des colonnes (13) qui relient ensemble de manière résistante à la traction une plaque de fixation de moulage fixe et une mobile (11, 12), et les écrous de broches (2) et les éléments de verrouillage (7, 8) sont disposés sur le côté postérieur d'une plaque de fixation de moulage (11 ou 12).

10. Machine d'injection selon la revendication 9, **caractérisé en ce que** les éléments de verrouillage (7, 8) sont des agrafes de verrouillage partagées qui s'engrènent dans les sections des colonnes (13) réalisées comme tiges filetées de broches (1) de manière à pouvoir être verrouillées derrière une des plaques de fixation de moulage (11 ou 12).

11. Machine d'injection avec une unité de serrage à trois plaques constituée d'une plaque de fixation de moulage fixe, d'une plaque de fixation de moulage mobile et d'une plaque d'extrémité, sachant qu'entre la plaque de fixation de moulage mobile et la. plaque d'extrémité au moins un entraînement fileté, de préférence deux entraînements filetés, est disposé selon l'une des revendications 1 à 8 et sachant que les tiges filetées de broches (1) sont des colonnes de pression et les écrous de broches (2) et les éléments de verrouillage sont disposés sur la plaque d'extrémité.

12. Entraînement fileté se composant de tiges filetées de broches (1), d'écrous de broches (2) et de roulements de paliers, qui sont engrenés dans des rainures (4) des roulements de paliers de la tige filetée de broche (1) et de l'écrou de broche (2), **caractérisé en ce qu'**au moins deux éléments de verrouillage (7, 8) sont prévus pouvant être déplacés en biais par rapport à l'axe de la tige filetée de broche (1) et qui comportent des formes de verrouillage qui correspondent de manière complémentaire aux rainures (4) des roulements de palier, sachant que la tige filetée de broche (1) et les éléments de verrouillage (7, 8) sont maintenus respectivement en position de verrouillage de manière résistante à la torsion.
